# EUROPEAN PATENT SPECIFICATION

(11) **EP 1 449 757 B1**
(45) Date of publication and mention of the grant of the patent: **23.06.2010**
(21) Application number: 04003436.5
(22) Date of filing: 16.02.2004
(51) Int. Cl.: B62K 25/28, B62K 25/20

(54) **Rear suspension**
Hintere Aufhängung
Suspension arrière

(30) Priority: 21.02.2003 JP 2003044877
(43) Date of publication of application: 25.08.2004
(60) Divisional application: 09176124.7
(73) Proprietor: HONDA MOTOR CO., LTD., Tokyo (JP)
(72) Inventor: Horii, Yoshiyuki c/o Kabushiki Kaisha Honda Kijutsu Kenkyusho, Wako-shi, Saitama (JP); Kurakawa, Yukinori c/o Kabushiki Kaisha Honda Kijutsu Kenkyusho, Wako-shi, Saitama (JP); Kudo, Takashi c/o Kabushiki Kaisha Honda Kijutsu Kenkyusho, Wako-shi, Saitama (JP)
(74) Representative: Liska, Horst

(56) References cited:
- EP-A1- 1 346 908
- EP-A2- 1 188 657
- EP-A2- 1 247 730
- GB-A- 2 116 127
- US-A- 4 511 013

## Description

The present invention relates to a rear suspension in a motorcycle and others.

A link mechanism in a rear suspension of a motorcycle is provided with a first link one end of which is supported by the side of a body frame and a second link one end of which is supported by the side of a rear swing arm, for example, an intermediate part of the first link is coupled to a coupling part provided to the lower end of a shock absorber and the other end is coupled to the other end of the second link.

There is also a link mechanism in which the side of the upper end of a damper is supported by the side of a rear swing arm and the side of the lower end is coupled to the side of a body frame via a link as in the above-mentioned conventional type (refer to JP-A-2002-302086).

As the lower end of the shock absorber is extended downward and the end is coupled to the link in the above-mentioned both examples, the position of the link becomes low and it is difficult to secure the minimum road clearance of the body. When the lower end of the shock absorber is simply lifted upward, the minimum road clearance can be secured, however, as the height of the side of the upper end is limited in terms of a layout of the body and the upper end cannot be freely heightened, the length of the shock absorber is reduced. However, to make the performance of the shock absorber satisfactory, it is required to lengthen the shock absorber to some extent.

In the meantime, as in the JP-A-2002-302086, when the side of a shock absorber is supported, a position in which the upper end of the shock absorber is attached can be equalized. However, as the side of a damper is supported in JP-A-2002-302086 and simultaneously, the upper end of a cushion spring is received, the damper can be lengthened, however, the cushion spring cannot be lengthened. However, to enhance the performance of the shock absorber, it is desired to lengthen both the damper and the cushion spring.

In US-A1-4,506,755, on which the preamble of enclosed claim 1 is based, the upper end of the shock absorber 12 is mounted by a horizontally extending bolt 14 on the seat frame 17, but not on the rear swing arm.

In EP-A2-1 247 730 the link is coupled to an end portion of the holder axially distant from the lower end of the spring. In US-A-4 511 013, spring holders are shown, each having a portion surrounding the spring, but the holders are linked at the end portions axially distant from the upper and lower ends of the spring, and not on a portion surrounding the spring. There, the upper end of the shock absorber is mounted by a horizontally extending bolt which requires a lateral access to this bolt for mounting.

The object of the invention is to enable securing minimum road clearance and to lengthen both a damper and a cushion spring, while no lateral mounting space for the head is required.

To solve the problems, there is provided a rear suspension in accordance with claim 1.

The rear suspension according to the invention is based upon a rear suspension provided with a rear swing arm the front end of which is coupled to a body frame so that the front end can be rocked and the rear end of which supports a rear wheel and a shock absorber provided between the rear swing arm and the body frame via a link and is characterized in that the shock absorber is provided with a damper, a cushion spring and a cushion holder covering the outside of the cushion spring and one end of the link is coupled to the side of the cushion holder.

The cushion holder can be arranged at either of the upper end or the lower end of the shock absorber. The upper end of the shock absorber may be also coupled to the rear swing arm and the lower end of the shock absorber may be also coupled to the body frame via the link.

The position of the link can be shifted upward by attaching one end of the link to the side of the cushion holder. As the cushion holder is a member for covering the side of the cushion spring, the cushion spring and the damper can be lengthened.

At this time, if the upper end of the shock absorber is coupled to the rear swing arm, the cushion holder is provided to the lower end of the shock absorber and the cushion holder is coupled to the body frame via the link, a position in which the link is attached can be heightened, compared with a position in the conventional type and sufficient minimum road clearance can be secured.

Referring to the drawings, one embodiment will be described below.

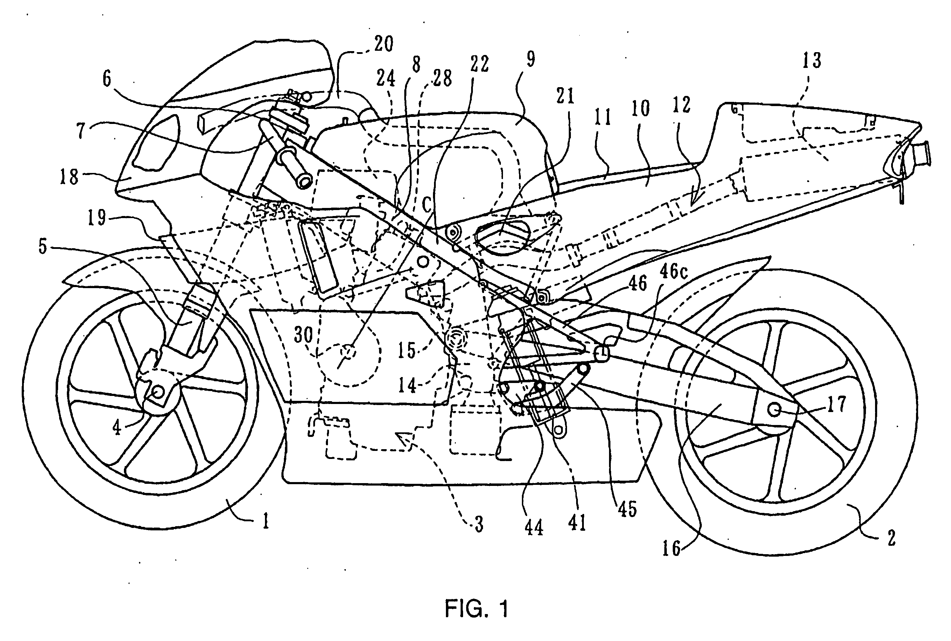

Fig. 1 is a side view showing the whole of a motorcycle equivalent to an embodiment;
Fig. 2 is a side view showing internal structure such as a body frame and an engine;
Fig. 3 enlarges a main part in Fig. 2;
Fig. 4 is an enlarged side view showing a rear suspension;
Fig. 5 is a side view showing a cushion holder;
Fig. 6 shows the cushion holder viewed from a direction different by 90° from the cushion holder shown in Fig. 5;
Fig. 7 is a plan showing the cushion holder;
Fig. 8 is a side view showing a first link;
Fig. 9 is a plan showing the first link; and
Fig. 10 is a side view showing a second link.

In these drawings, a motorcycle equivalent to this embodiment is a sport motorcycle having large displacement in which a 4-cycle in-line 4-cylinder engine 3 is arranged between a front wheel 1 and a rear wheel 2. The front wheel 1 is supported by a lower end of a front fork 5 via a front axle 4, the upside of the front fork 5 is rotatably coupled to a head pipe 6 and can be steered by a handlebar 7. The head pipe 6 is provided to the front end of a body frame 8, a fuel tank 9 is supported on the body frame 8 and an engine 3 is supported on the downside. A rear cowl 10 extended diagonally upward and backward from the rear of the body frame 8 is provided at the back of the fuel tank 9 and a seat 11 is attached to the rear cowl.

An exhaust pipe 12 extended longitudinally and a muffler 13 connected to the rear end are arranged on the inside of the rear cowl 10. The front end of a rear swing arm 16 is supported by a pivot frame 14 formed in the rear of the body frame 8 at a pivot point 15 so that the rear swing arm can be rocked. The rear end of the rear swing arm 16 is supported by a rear axle 17 so that the rear wheel 2 can be rotated.

The front of the body is covered with a front cowl 18 and the front cowl 18 covers each front of the head pipe 6 and the engine 3 and the left and right sides of the body including the body frame 8 and the engine 3. A reference number 19 denotes an intake duct and a pair are provided on the left and right sides of the body. A reference number 20 denotes an exhaust cooling duct provided by one, and the exhaust cooling duct cools the exhaust pipe 12 by taking in wind from the upside of the front of the front cowl 18, vertically piercing the rear through the upside of the fuel tank 9 and opening to the rear cowl 10. A reference number 21 denotes a wind intake and the wind intake is provided to the left and right sides of the front of the rear cowl 10.

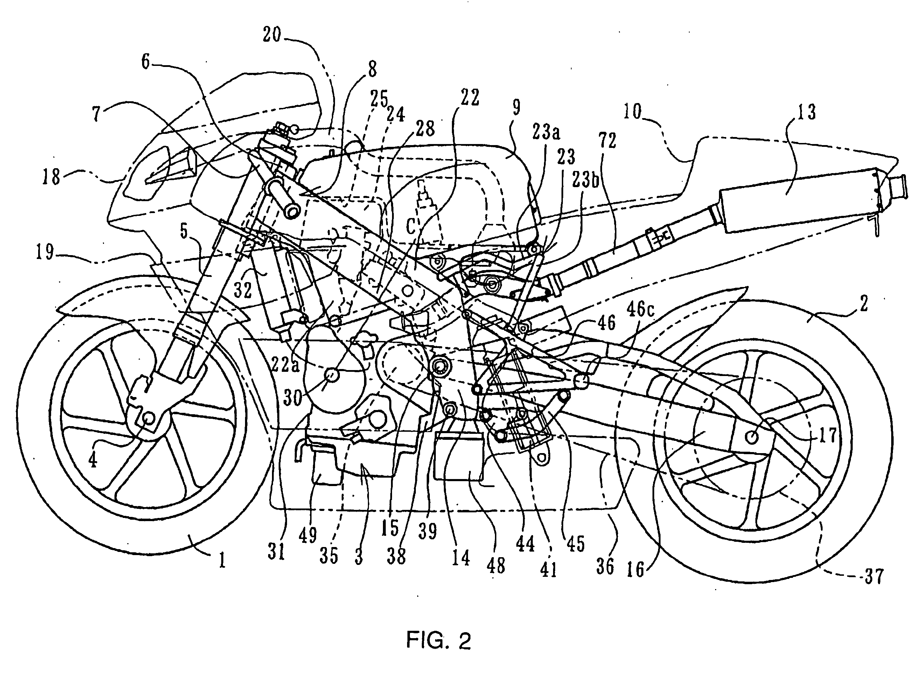

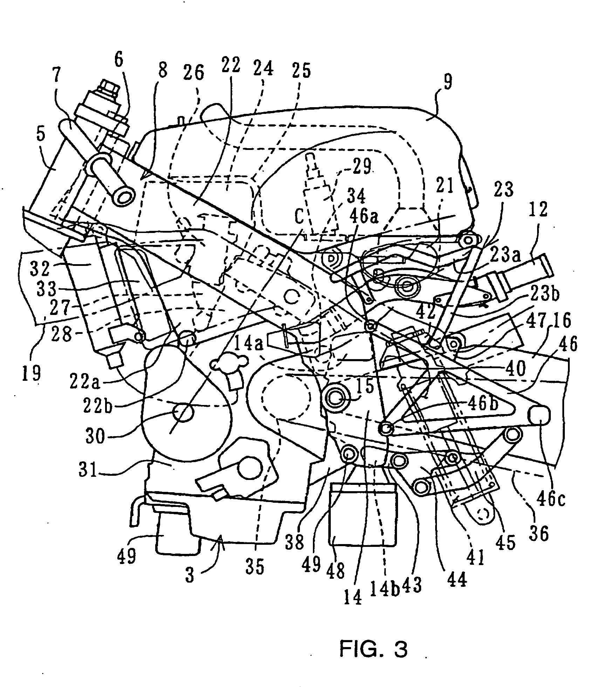

As shown in Figs. 2 and 3, the body frame 8 is provided with a main frame 22 extended diagonally downward over the engine 3 and longitudinally from the upside of the engine 3 and the pivot frame 14 connected to the rear end and extended downward. A tank frame 23 substantially triangular when the tank frame is viewed from the side is also provided to the rear end of the main frame 22 so that the tank frame is convex upward from the main frame 22, and the rear of the fuel tank 9 is supported by the tank frame.

The main frame 22 and the tank frame 23 are made of a metal square pipe. The pivot frame 14 is made of a cast metal plate. These are provided by a pair on the left and right sides, left and right upper pipes 23a of the tank frame 23 are coupled at the rear end, and the left and the right of the main frame 22 and the pivot frame 14 are coupled via cross pipes 14a, 14b shown in Fig. 3 and others.

An intake box 24 is arranged between the fronts of the left and the right of the main frame 22 and at the back of the head pipe 6 in a state in which the intake box is housed in a concave portion 25 formed on the side of the bottom of the front of the fuel tank 9. The intake box 24 communicates with the left and right intake ducts 19 and takes in air, applying wind pressure on an electronic fuel inj ection system 26 provided inside.

An intake port 27 connected to the electronic fuel injection system 26 is extended substantially straightly upward from the front slope of a cylinder 28 inclined backward and performs a downdraft-type intake. As for the cylinder 28, parallel four cylinders are arranged in a direction of the width of the body. The respective four pieces of electronic fuel injection systems 26 and intake ports 27 are arranged in the direction of the width of the body by one every cylinder 28. Fuel is supplied to the electronic fuel injection system 26 from the downside of the bottom of the fuel tank 9 by a fuel pump 29 provided in the fuel tank 9.

The cylinder 28 is in a so-called state inclined backward in which the axis C is inclined diagonally upward and backward when the axis is viewed from the side in Fig. 3 and a crankshaft 30 is located on a line extended downward of the axis C. The crankshaft 30 is located in the vicinity of the front end of a crankcase 31 and in front of the lower end of the cylinder 28, and the intake box 24 is located on a vertical line passing the crankshaft 30. As shown in Fig. 3 in which the body is viewed from the side, the front end of the crankcase 31 and the front end of the intake box 24 are located in the substantially same position in a longitudinal direction, and the intake box 24 is arranged in a substantially front position.

A radiator 32 which is a cooling part is suspended backward and diagonally downward from the vicinity of the head pipe 6 of the main frame 22 and is supported in front of the cylinder 28, and the lower end is supported by the upside of the front end of the crankcase 31 in the vicinity of the lower end of the cylinder 28. Space 33 in a substantially V type when the space is viewed from the side is formed between the radiator 32 and the cylinder 28, the intake box 24 is located above the space 33, the intake port 27 is extended upward from the front of the cylinder 28 in the space 33 and is connected to the electronic fuel injection system 26.

The front end of the exhaust pipe 12 is connected to an exhaust port 34 provided to the rear of the cylinder 28. The exhaust pipe is extended backward and diagonally upward from here inside the rear cowl 10. Total four pieces of fronts are provided to the exhaust pipe 12 by one every cylinder, are integrated into two halfway, are integrated into one further at the back, the one is divided into left and right two again at the rear end and is connected to a pair of left and right mufflers 13 to be a 4-2-1-2 aggregation type. Each rear end of the left and right mufflers 13 is protruded backward from an opening provided to the rear end of the rear cowl 10.

An output sprocket 35 is provided to the rear of the engine below the exhaust port 34 so that the output sprocket drives a rear wheel sprocket 37 shown in Fig. 2 via a chain 36. The engine 3 is attached to a stay 22a extended downward from the downside of the main frame 22 at a coupling point 22b at the upper end on the front side of the crankcase 31 and is attached to a stay 38 extended from the downside of the rear of the crankcase 31 at the lower end of the pivot frame 14 and a coupling point 39.

The rear swing arm 16 is relatively long and is substantially in the shape of a trapezoid when it is viewed from the side, and is manufactured by the casting of metal and others. In the front, left and right forked arms 40 are formed and are coupled to substantially the center in a vertical direction of the pivot frame 14 and the front end at the pivot point 15 so that the arms can be rocked. A rear cushion 41 is vertically arranged between the left and right arms 40 with it inclined forward and the upper end is supported by a bridge 42 installed between the left and right arms 40.

The downside of the rear cushion 41 is coupled to the rear swing arm 16 via a substantially triangular first link 44 linked with a stay 43 extended backward from the cross pipe 14b for coupling each lower part of the left and right pivot frames 14 by a shaft and a second link 45 coupled to the first link and in the shape of an arm.

A reference number 46 denotes a substantially triangular step bracket extended backward so that the step brackets cover both left and right sides of the front of the rear swing arm 16, and its front ends are connected to an upper point and a lower point at the rear end of the pivot frame 14 at vertical two points 46a, 46b. Further, a step 46c is attached to its rear end. A stay 47 is protruded upward on the upside of the step bracket 46, and the lower end on the side of a lower side 23b of the tank frame 23 and the downside of the front end of the rear cowl 10 are attached to the stay.

A reference number 48 denotes a battery, and the battery is suspended and supported from/by the lower end of the pivot frame 14 so as to lower the center of gravity of the body and converge mass. A reference number 49 denotes an oil filter and the oil filer is protruded downward from a position on the front side of the bottom of the crankcase 31.

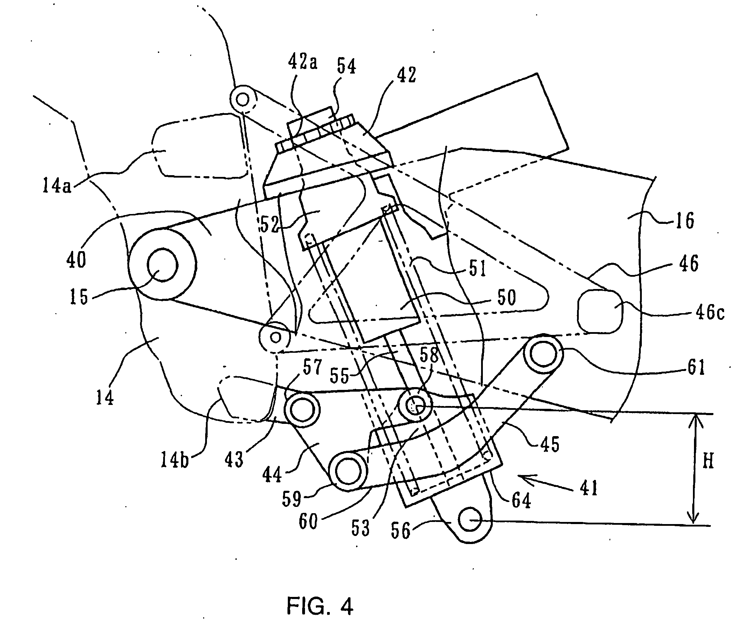

As shown in Fig. 4, the rear cushion 41 which is a shock absorber is provided with a damper 50 and a cushion spring 51, the upper end of the cushion spring 51 is received by an upper retainer 52 attached to the side of the upside of the damper 50 and the lower end is received by a cushion holder 53. A head 54 extended above the retainer 52 at the upper end of the damper 50 is fitted into a hole 42a of the bridge 42 and is prevented from falling upward by the retainer 52.

The cushion holder 53 is a cylindrical member having a bottom and inside it, the lower end of a piston rod 55 extended downward from the damper 50 and the lower end of the cushion spring 51 are supported by the bottom. A part attached to the lower end 56 is extended downward from the bottom of the cushion holder 53. This part is a part common to conventional type structure which is not required in this embodiment. Therefore, though the part can be also omitted, it can be used for a rear suspension having conventional type structure as it is and can be shared.

The first link 44 is substantially triangular when it is viewed from the side, is linked with a stay 43 via a shaft at an intermediate vertex 57, is linked with the side of the cushion holder 53 via a shaft at an upper vertex 58 and is linked with the front end 60 of the second link 45 via a shaft at a lower vertex 59.

The second link 45 is in the shape of an arm, is extended diagonally upward and backward when the second link is viewed from the side and is linked with the side of the rear swing arm 16 via a shaft at the rear end 61. As for the second link 45, a pair of left and right ones are provided.

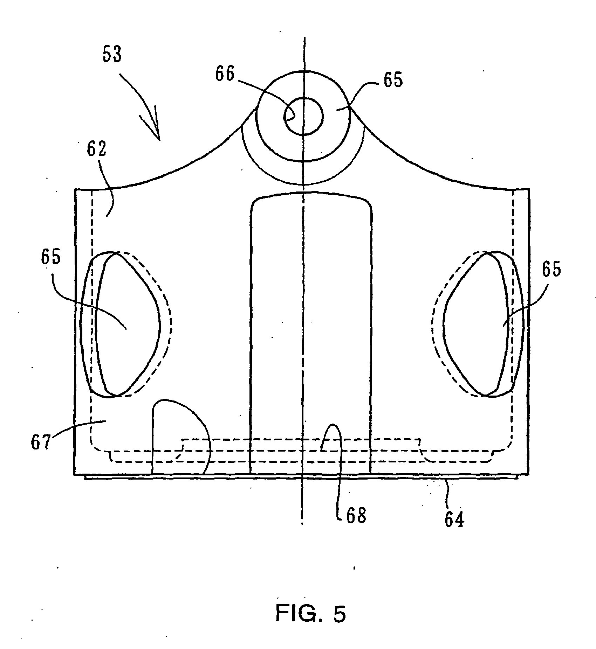

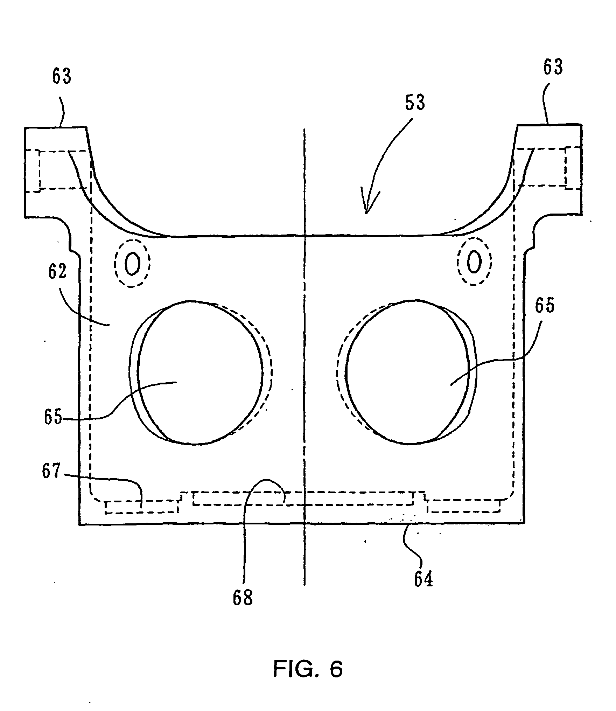

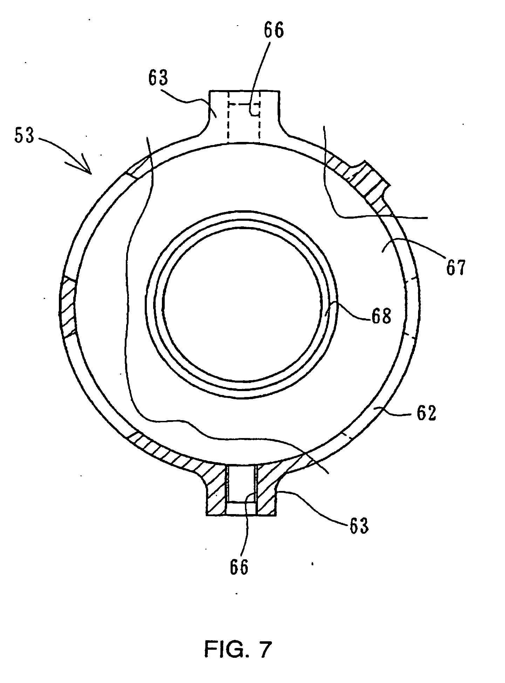

As shown in Figs. 5 to 7, the cushion holder 53 is acquired by suitably casting metal material such as an aluminum alloy, and a side peripheral wall 62, a boss 63 provided at the upper end and the bottom 64 are integrated. The side peripheral wall 62 is a part housing a lower part of the cushion spring 51 inside and covering the side and thinning holes 65 of an adequate number are formed on the periphery.

The bosses 63 are formed as a pair of parts in the shape of an arm overhanging opposite positions at the upper end of the side peripheral wall 62 and a nut hole 66 for linking the first link 44 via a shaft is formed at the end. A concave portion 67 for housing the lower end of the cushion spring 51 is provided to the periphery of the bottom 64 and a central concave portion 68 for receiving the lower end of the piston rod 55 is provided inside. The part attached to the lower end 56 is protruded below a hole formed in the center.

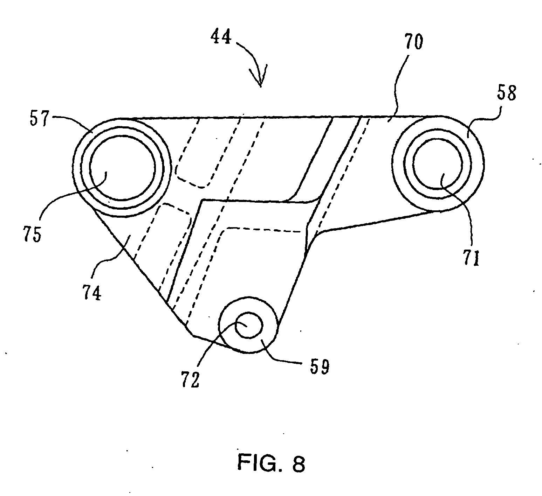

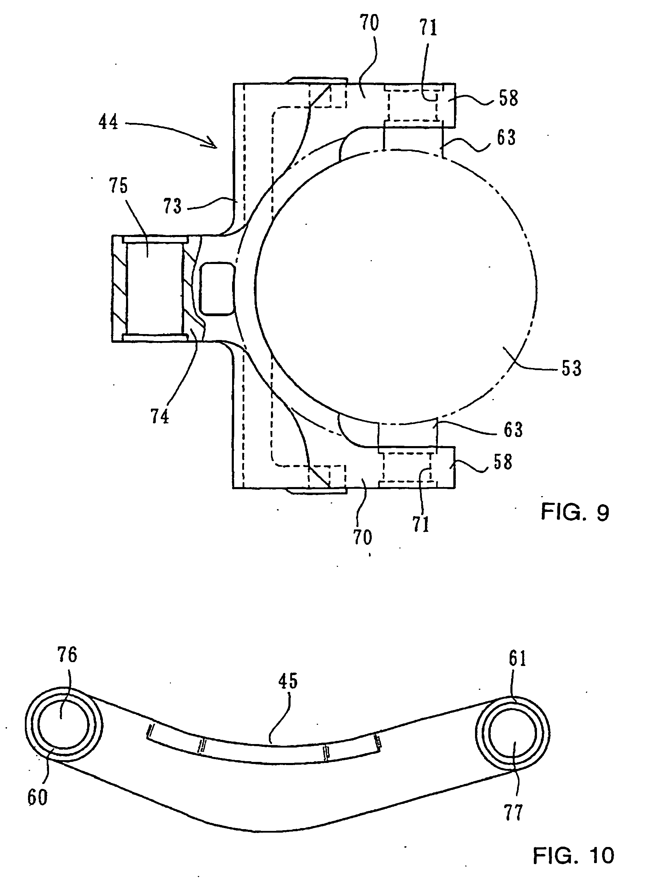

The first link 44 is formed using a light alloy such as an aluminum alloy and other suitable metal material by a suitable method such as casting and forging as shown in Figs. 8 and 9. As clear from Fig. 9, the upper vertex 58 is formed at each end of an arm 70 substantially U-shaped when the arm is viewed from the top so that the side of the cushion holder 53 is held between the vertexes and overhanged so that the forked sides of the cushion holder 53 are overlapped with the arm slightly longer than approximately 1/2, and a hole for inserting a bolt 71 is formed at each end.

The lower vertex 59 is provided to a part protruded so that the part is overlapped with the side of the cushion holder 53 by approximately 1/4 at the lower end viewed from the side of the first link 44, and a hole for inserting a bearing 72 is formed so that the bearing (not shown) is inserted into the hole. A protruded part 74 coupling the left and right arms 70 and protruded forward from the center of the front 73 overlapped with the front side of the cushion holder 53 is provided, the end functions as the part attached to the lower end 56 and a hole for inserting a bearing 75 is formed there.

The second link 45 is manufactured by the similar material and method to those of the first link 44 as shown in Fig. 10 and holes for inserting bearings 76, 77 are formed at the front end 60 and at the rear end 61 of both ends. The hole for inserting the bearing 76 is made coincident with the hole for inserting the bearing 72 by overlapping it with the outside of the lower vertex 59 of the first link 44 and is linked by a shaft member not shown so that the shaft member can be relatively turned. The hole for inserting the bearing 77 is overlapped with a boss formed on the side of the rear swing arm 16 from the outside, is made coincident with its nut hole and is similarly linked via a shaft.

Next, the action of this embodiment will be described. When a load on the side of a road is input to the rear swing arm 16 from the rear wheel, the rear swing arm 16 is rocked upward with the pivot point 15 in the center, this rock is transmitted from the second link 45 to the first link 44, further, the first link 44 is turned counterclockwise in Fig. 4 with a part linked via a shaft of the part attached to the lower end 56 in the center, out of the cushion spring 51 and the piston rod 55 the respective lower ends of which are pressed by the cushion holder 53 to which the upper vertex 58 is coupled, the cushion spring 51 is compressed and increases downward reaction force, the piston rod 55 is pushed up upward in Fig. 4, moves a piston not shown in the damper 50 upward and generates damping force.

When no load is input from the rear wheel, the rear swing arm 16 is rocked in a reverse direction by the reaction force of the cushion spring 51 and is restored. At this time, as the first link 44 is coupled to the side of the cushion holder 53 at the upper vertex 58, the attached position is shifted upward by H, compared with the conventional type in which the first link is coupled to the part attached to the lower end 56. As a result, the position of the stay 43 that supports the first link 44 is also shifted upward and further, the positions of the lower vertex 59 which is a position coupled to the second link 45 and the front end 60 are also shifted upward. Therefore, sufficient minimum road clearance can be secured.

In addition, as the bottom 64 of the cushion holder 53 can be located below the upper vertex 58 though the upper vertex 58 is shifted in a higher position, the cushion spring 51 can be made long enough. Besides, as the piston rod 55 is not required to be shortened, the damper 50 is not also required to be shortened.

Besides, as the bottom 64 that supports each lower end of the cushion holder 53 and the piston rod 55 is not related to the position of the upper vertex 58, they can be freely shifted downward within a range in which minimum road clearance can be secured. Therefore, it can be simultaneously realized to secure minimum road clearance and to sufficiently lengthen both the damper 50 and the cushion spring 51.

The invention is not limited to the above-mentioned embodiment and can be variously transformed and applied within the principle of the invention. For example, the arrangement of the cushion holder 53 in the rear cushion 41 is vertically reversed, the cushion holder 53 is provided to the side of the upper end of the rear cushion 41, is coupled to the side of the body frame via the link there and the side of the lower end of the rear cushion 41 may be also coupled to the lower part of the rear swing arm 16. In this case, as the link is not protruded upward from the upper end of the rear cushion 41, the rear cushion 41 can be arranged in a high position.

The invention secures minimum road clearance by heightening the position of a link coupled to the lower end of a rear cushion and to sufficiently lengthen a damper and a cushion spring.

In the invention, a rear cushion 41 includes a damper 50 and a cushion spring 51 and each lower end of a piston rod 55 and the cushion spring 51 is supported by a cylindrical cushion holder 53 having the bottom. A first link 44 is linked with the side of the cushion holder 53 via a shaft. The other parts of the first link 44 are linked with a stay 43 of a pivot frame 14 and a second link 45 via each shaft. The rear end 61 of the second link 45 is linked with the side of a rear swing arm 16 via a shaft and the upper end of the rear cushion 41 is supported by the pivot frame 14 via a bridge 42.

## Claims

1. A rear suspension provided with a rear swing arm (16) comprising left and right arms (40) and a bridge (42) installed between the left and right arms (40),
wherein the front end of the rear swing arm (16) is coupled to a body frame (8) so that the front end can be rocked and the rear ends of the left and right arms (40) support a rear wheel (2), and
a shock absorber (41) provided between the rear swing arm (16) and the body frame (8) via a link (44), wherein the shock absorber (41) is provided with a damper (50), a cushion spring (51) and a cushion holder (53); and
one end (58) of the link (44) is coupled to a portion of the cushion holder (53) covering the outside of the cushion spring (51),
**characterized in that**
the upper end of the cushion spring (51) is received by an upper retainer (52) attached to the side of the upside of the damper (50), wherein a head (54) extended above the retainer (52) at the upper end of the damper (50) is fitted into a hole (42a) of the bridge (42) and is prevented from falling upward by the retainer (52).

2. A rear suspension according to claim 1, wherein:
the upper end of the shock absorber (41) is coupled to the rear swing arm (16); and
the lower end of the shock absorber (41) is coupled to the body frame (8) via the link (44).

3. A rear suspension according to claim 1, wherein:
the cushion holder (53) has a side peripheral wall (62), a boss (63) provided at the upper end and the bottom (64) which are integrated, wherein the side peripheral wall (62) is a part housing a lower part of the cushion spring (51) inside and covering the side peripheral of the cushion spring (51).

4. A rear suspension according to claim 1, wherein:
bosses (63) are formed as a pair of parts in the shape of an arm overhanging opposite portions at the upper end of the side peripheral wall (62) and a nut hole (66) for linking the link (44) via a shaft is formed at the end.

## Patentansprüche

1. Hinterradaufhängung, die mit einem hinteren Schwingarm (16) versehen ist, der linke und rechte Arme (40) und eine zwischen den linken und rechten Armen (40) angebrachte Brücke (42) aufweist, worin das Vorderende des hinteren Schwingarms (16) mit einem Aufbaurahmen (8) derart gekoppelt ist, dass das Vorderende verschwenkt werden kann und die Hinterenden der linken und rechten Arme (40) ein Hinterrad (2) tragen, und
ein Stoßabsorber (41), der zwischen dem hinteren Schwingarm (16) und einem Aufbaurahmen (8) über ein Verbindungsglied (44) vorgesehen ist, wobei der Stoßabsorber (41) mit einem Dämpfer (50), einer Dämpffeder (51) und einem Federhalter (53) versehen ist; und ein Ende (58) des Verbindungsglieds (44) mit einem Abschnitt des Federhalters (53) gekoppelt ist, der die Außenseite der Dämpffeder (51) bedeckt,
**dadurch gekennzeichnet, dass** das Oberende der Dämpffeder (51) von einem oberen Halter (52) aufgenommen ist, der seitens der Oberseite des Dämpfers (50) angebracht ist, worin ein Kopf (54), der sich über den Halter (52) am Oberende des Dämpfers (50) erstreckt, in ein Loch (42a) der Brücke (42) eingesetzt ist und durch den Halter (52) daran gehindert wird, nach oben zu fallen.

2. Hinterradaufhängung nach Anspruch 1, worin das Oberende des Stoßabsorbers (41) mit dem hinteren Schwingarm (16) gekoppelt ist; und
ein Unterende des Stoßabsorbers (41) mit dem Aufbaurahmen (8) über das Verbindungsglied (44) gekoppelt ist.

3. Hinterradaufhängung nach Anspruch 1, worin der Federhalter (53) einen Seitenumfangswand (62), eine Nabe (63), die am Oberende vorgesehen ist, und einen Boden (64), die einstückig sind, aufweist, wobei die Seitenumfangswand (62) ein Teil ist, das im Inneren ein unteres Teil der Dämpffeder (51) aufnimmt und den Seitenumfang der Dämpffeder (51) abdeckt.

4. Hinterradaufhängung nach Anspruch 1, worin Naben (63) als Paar von Teilen in der Form eines Arms ausgebildet sind, der an entgegengesetzten Abschnitten am Oberende der Seitenumfangswand (62) überhängt, und ein Mutterloch (66) zum Koppeln des Verbindungsglieds (44) über eine Welle an dem Ende ausgebildet ist.

## Revendications

1. Suspension arrière prévue avec un bras oscillant arrière (16) comprenant des bras gauche et droit (40) et un pont (42) installé entre les bras gauche et droit (40),
dans laquelle l'extrémité avant du bras oscillant arrière (16) est couplée à un châssis (8) de sorte que l'extrémité avant peut être basculée et que les extrémités arrière des bras gauche et droit (40) supportent une roue arrière (2), et
un amortisseur (41) prévu entre le bras oscillant arrière (16) et le châssis (8) via une biellette (44), dans laquelle l'amortisseur (41) est prévu avec un organe amortisseur (50), un ressort amortisseur (51) et un support de ressort (53) ; et
une extrémité (58) de la biellette (44) est couplée à une partie du support de ressort (53) recouvrant l'extérieur du ressort amortisseur (51),
**caractérisée en ce que :**
l'extrémité supérieure du ressort amortisseur (51) est reçue par un dispositif de retenue supérieur (52) fixé sur le côté du dessus de l'organe amortisseur (50), dans laquelle une tête (54) étendue au-dessus du dispositif de retenue (52) au niveau de l'extrémité supérieure de l'organe amortisseur (50) est montée dans un trou (42a) du pont (42) et le dispositif de retenue (52) l'empêche de tomber vers le haut.

2. Suspension arrière selon la revendication 1, dans laquelle :
l'extrémité supérieure de l'amortisseur (41) est couplée au bras oscillant arrière (16) ; et
l'extrémité inférieure de l'amortisseur (41) est couplée au châssis (8) via la biellette (44).

3. Suspension arrière selon la revendication 1, dans laquelle :
le support de ressort (53) a une paroi périphérique latérale (62), une bosse (63) prévue au niveau de l'extrémité supérieure et du fond (64) qui sont d'un seul tenant,
dans laquelle la paroi périphérique latérale (62) est une partie logeant une partie inférieure du ressort amortisseur (51) à l'intérieur et recouvrant la paroi périphérique latérale du ressort amortisseur (51).

4. Suspension arrière selon la revendication 1, dans laquelle les bosses (63) sont formées comme une paire de parties ayant la forme d'un bras faisant saillie sur les parties opposées au niveau de l'extrémité supérieure de la paroi périphérique latérale (62) et un trou de boulon (66) pour relier la biellette (44) via un arbre qui est formé au niveau de l'extrémité.
